# EUROPEAN PATENT APPLICATION

(11) **EP 4 717 335 A1**
(43) Date of publication of application: **01.04.2026**
(21) Application number: 25204919.2
(22) Date of filing: 26.09.2025
(51) Int. Cl.: A63F 3/06

(54) **LOTTERY TICKET**

(30) Priority: 30.09.2024 JP 2024170969
(71) Applicant: Bandai Co., Ltd., Tokyo 111-8081 (JP)
(72) Inventor: Mukodaka, Hiroaki, Tokyo, 111-8081 (JP)
(74) Representative: Studio Torta S.p.A.

(57) **Abstract**

Provided is a lottery ticket (1) with good operability without reducing an information indication region on the lottery ticket (1).

The lottery ticket (1) includes a main body portion (10) including an opening portion (11a), the main body portion (10) is formed with a holding portion (11d) capable of holding the opening portion (11a) and a separation portion (20) capable of separating the opening portion (11a), the opening portion (11a) includes a tab portion (11c), and the separation portion (20) includes a curve in a vicinity of the tab portion (11c). The separation portion (20) includes the curve in the vicinity of the tab portion (11c), so that an opening direction can be smoothly changed without causing unexpected breakage.

## Description

### Technical Field

The present invention relates to a lottery ticket.

### Background Art

For example, Patent Document 1 discloses a conventional lottery ticket obtained by folding in two a composite sheet having a metal foil subjected to desired printing on an outer surface, or by stacking two of such sheets; forming a figure, a character, and the like, such as win/lose indications and a winning number, and a seal portion along an outer periphery of the lottery ticket by printing or the like on both inner surfaces or one inner surface of the composite sheet using a colored heating sealing agent; and heat sealing the seal portion.

### Citation List

### Patent Literature

Patent Literature 1: Japanese Utility Model Examined Publication No. 51-33280

### Summary of Invention

### Technical Problem

Patent Literature 1 adopts a configuration in which two flat sheets are stacked together and information, such as winning information, is indicated on inner sides of the flat sheets. This configuration has no tab portion for peeling operation, so that an information indication region can be increased while causing difficulty in performing the peeling operation. The opening operation is easy when a lottery ticket is provided with a tab portion; however, a region for indicating lottery ticket information is reduced.

An object of the present invention is to provide a lottery ticket with good operability without reducing an information indication region on the lottery ticket.

### Solution to Problem

A lottery ticket according to an embodiment of the present invention is a lottery ticket, in which the lottery ticket includes a main body portion including an opening portion, the main body portion is formed with a holding portion capable of holding the opening portion and a separation portion capable of separating the opening portion, the opening portion includes a tab portion, and the separation portion includes a curve in a vicinity of the tab portion.

### Advantageous Effects of Invention

The present invention is capable of providing the lottery ticket with good operability without reducing an information indication region on the lottery ticket.

### Brief Description of Drawings

FIG. 1 is a perspective view of a lottery ticket according to an embodiment of the present invention;
FIG. 2 is a sectional view of a portion taken along line A-A in FIG. 1;
FIG. 3 is a sectional view of a main part illustrating an example of peeling operation;
FIG. 4 is a plan view illustrating a state at an initial stage of opening operation;
FIG. 5 is an enlarged plan view for explaining a separation form of separation portions at the initial stage of the opening operation;
FIG. 6 is a perspective view illustrating an example of an opening form of the lottery ticket; and
FIG. 7 is a perspective view illustrating another example of the opening form of the lottery ticket.

### Description of Embodiments

Hereinafter, an embodiment of a lottery ticket representing an aspect of the present invention will be described with reference to the drawings.

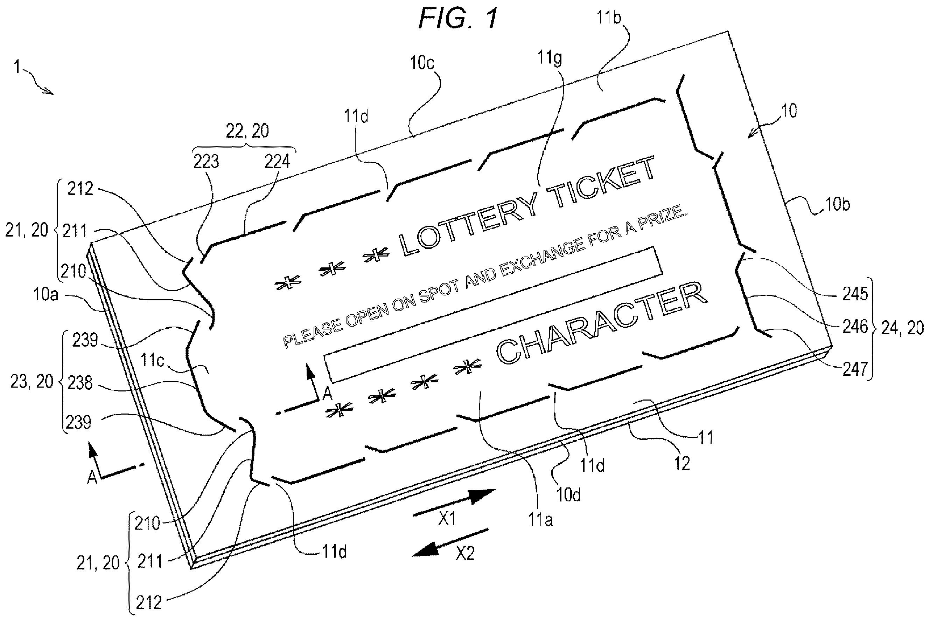

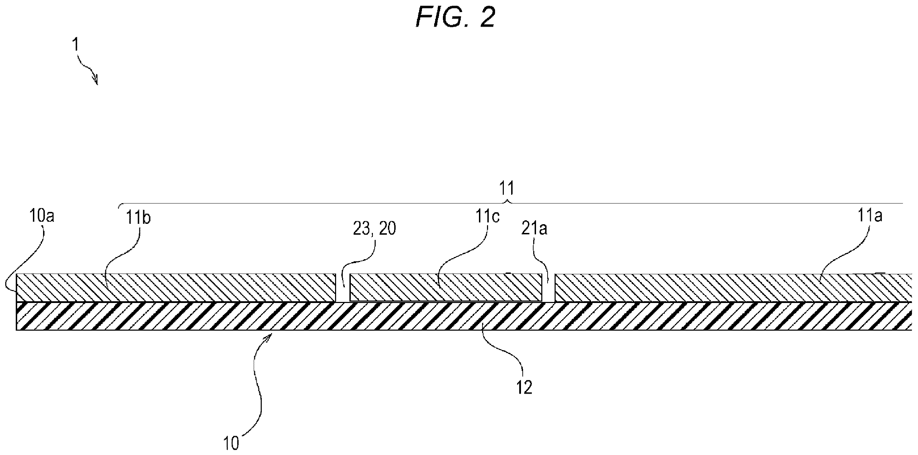

FIG. 1 is a perspective view of an embodiment of a lottery ticket 1. FIG. 2 is a sectional view of a portion taken along line A-A in FIG. 1.

For example, as illustrated in FIG. 1, the lottery ticket 1 has a rectangular flat plate shape with left and right short sides 10a and 10b and upper and lower long sides 10c and 10d. Further, a first sheet body 11 on an one surface portion which is a front side of the lottery ticket (upper side in the drawing) and a second sheet body 12 on an other surface portion which is a back side of the lottery ticket (lower side in the drawing) are integrated by peelable adhesion to form a main body portion 10. The main body portion 10 is provided with an opening portion 11a of a lottery ticket main body part that can be detached (peeled off) from the first sheet body 11. The opening portion 11a includes, on a front surface side of the opening portion 11a, a front side indication portion 11g printed with various types of information as shown in the drawing.

A structure of a detaching portion of the opening portion 11a is a perforated structure in which a separation portion 20 which is a cut line and a holding portion 11d which disconnects the separation portion 20 are alternately arranged, and a length of each holding portion 11d is shorter than a length of each separation portion 20. The separation portion 20 has four configurations, that is, a first separation portion 21 and a third separation portion 23 arranged on the left short side 10a side, a second separation portion 22 arranged on the upper and lower long sides 10c and 10d side, and a fourth separation portion 24 arranged on the right short side 10b side. The second separation portion 22, the third separation portion 23, and the fourth separation portion 24 are each a combination of straight parts, and the first separation portion 21 includes a curve.

The first separation portion 21 includes a curved portion 210, a first straight portion 211, and a second straight portion 212. The second separation portion 22 includes a short third straight portion 223 bent inward and a long fourth straight portion 224 parallel to the long sides (10c and 10d). The fourth separation portion 24 includes a long sixth straight portion 246 at the center, a short fifth straight portion 245 bent outward on one end side of the sixth straight portion 246, and a short seventh straight portion 247 bent outward on an other end side of the sixth straight portion 246. In addition, the third separation portion 23 has substantially the same shape as the fourth separation portion 24. The third separation portion 23 has a shape in which inclined linear portions 239 at both ends are longer than those of the fourth separation portion 24 and a central linear portion 238 at the center and the inclined linear portions 239 at both ends are connected via a curve. A region surrounded by the third separation portion 23 functions as a tab portion 11c gripped in peeling operation.

The two first separation portions 21 are formed, on the upper and lower sides of the tab portion 11c in the drawing, inside the opening portion 11a in a vicinity of the tab portion 11c so as to form a proximal end portion of the tab portion 11c. In addition, a larger number of the second separation portions 22 than the first separation portions 21 are provided along the upper and lower long sides 10c and 10d. In addition, three fourth separation portions 24 are provided along the right short side 10b.

As illustrated in FIG. 2, the separation portion 20 is a cut line along which the first sheet body 11 on a front surface side is completely separated. The first sheet body 11 and the second sheet body 12 are bonded together so as to be easily peeled off by a pulling force in a thickness direction of the first sheet body 11 and the second sheet body 12. A depth of the cut line of the separation portion 20 illustrated in FIG. 2 reaches the second sheet body 12; however, for example, the separation portion 20 may have a half-cut structure in which the first sheet body 11 is not completely cut and separated.

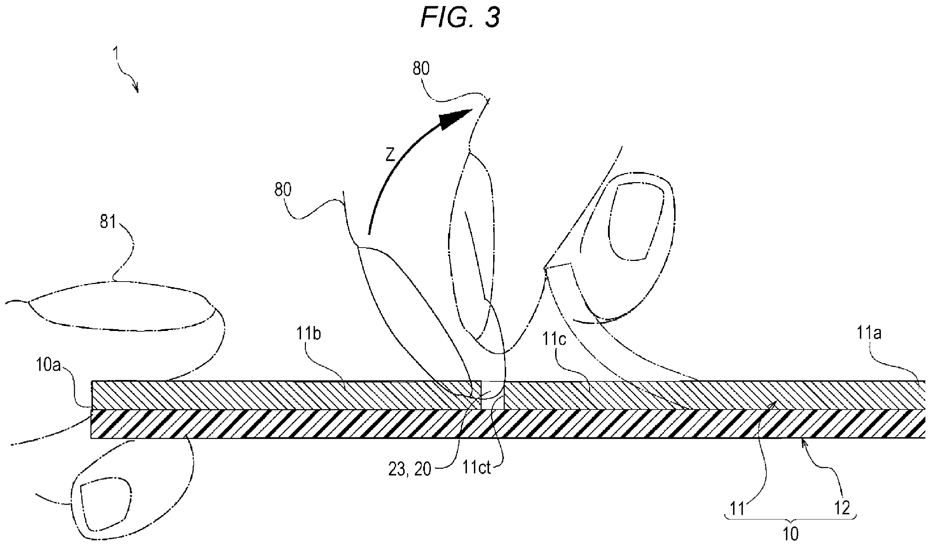

FIG. 3 is a sectional view of a main part illustrating an example of the peeling operation.

The peeling off of the opening portion 11a starts from, for example, the tab portion 11c. In this case, for example, a tip of a finger 80 of one hand hooks on a tab tip edge 11ct of the tab portion 11c. At this time, a finger 81 of the other hand grips a vicinity of the left short side 10a, and for example, applies a force in a direction of forming a curved surface in which a front surface side protrudes, so that the tab tip edge 11ct lifts up. The lifted tab tip edge 11ct is gripped with fingertips and pinched up (lifted in a Z direction in the drawing).

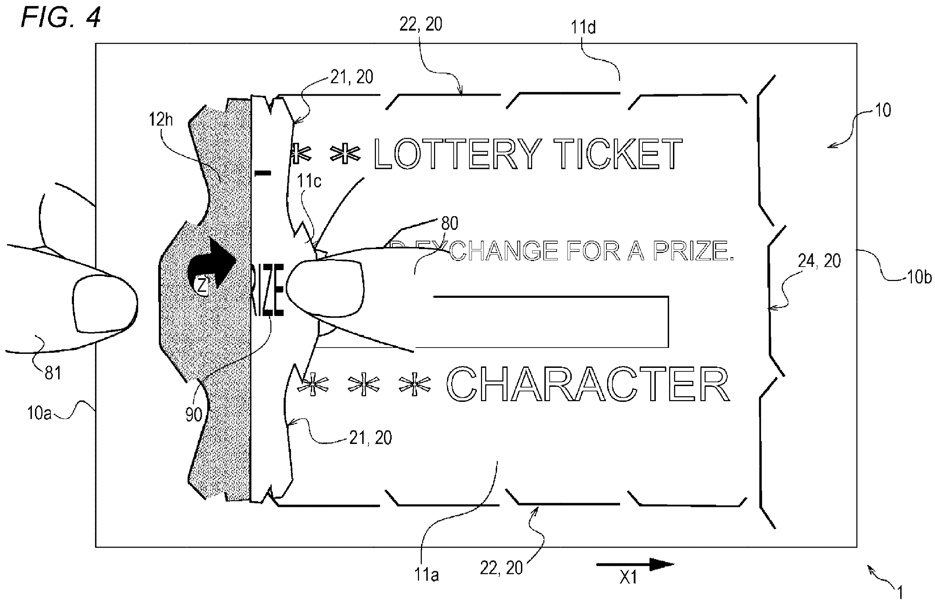

FIG. 4 is a plan view illustrating a state at an initial stage of opening operation.

As to the separation portion 20, the third separation portion 23 is separated and subsequently the first separation portion 21 is separated to separate a width direction of the opening portion 11a (a vertical direction in the drawing) by picking up the tab portion 11c, as shown in FIG. 4. In the subsequent opening, the second separation portion 22 is peeled off along a first direction (X1) from the left short side 10a which is one end portion on the left side toward the right short side 10b which is an other end portion on the right side.

Here, progress of separation operation at the initial stage of the opening will be described.

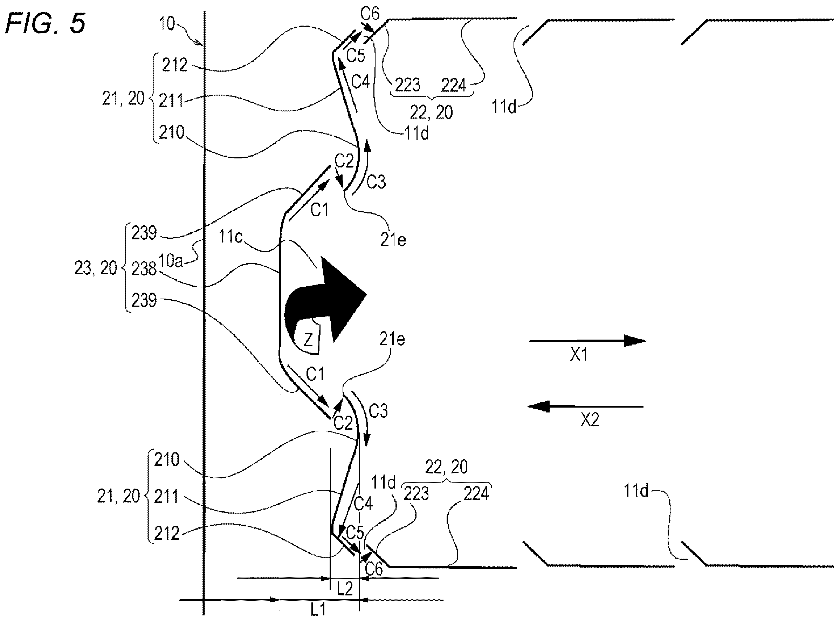

FIG. 5 is an enlarged plan view for explaining a separation form of separation portions at the initial stage of the opening operation. First, the tab portion 11c is lifted up as described above to open the opening portion 11a in the width direction (the vertical direction in the drawing). By the operation of picking up the tab portion 11c, the opening (separation) proceeds along the inclined linear portions 239 above and below the tab portion 11c in the drawing (arrow C1 in the drawing). When the separation proceeds to the holding portion 11d between the end portion (right side end in the drawing) of the inclined linear portion 239 and the first separation portion 21, the holding portion 11d is broken toward an end portion 21e of the curved portion 210 of the first separation portion 21 (arrow C2 in the drawing). As a result, a separation line proceeding in the vertical direction proceeds slightly inward and the opening is connected to the curved portion 210.

In the curved portion 210, the proceeding direction of the opening is changed from the first direction (X1) to a second direction (X2) directing the opposite direction (arrow C3 in the drawing). After the opening direction is directed in the second direction (X2) by the curved portion 210, the opening proceeds by the first straight portion 211 having a component directed in the second direction (X2) (arrow C4 in the drawing). Thereafter, the opening direction is changed again to the first direction (X1) (arrow C5 in the drawing) by the second straight portions 212 intersecting the first straight portions 211 at an obtuse angle. The holding portion 11d between the second straight portion 212 and the third straight portion 223 of the second separation portion 22 is then broken (arrow C6 in the drawing), and the opening is connected to the fourth straight portion 224 longer than the third straight portion 223. The opening is then opened up to a right end of the opening portion 11a along the fourth straight portion 224.

Here, in the initial opening of the opening portion 11a in the width direction, the opening direction returns by a second opening length L2 in the second direction (X2) (moving distance to the left caused by the opening) after opened by a first opening length L1 in the first direction (X1) (moving distance to the right caused by the opening), as described above. The returning second opening length L2 is smaller than the first opening length L1. That is, it is configured such that the opening operability is not adversely affected by too large a return of the opening direction.

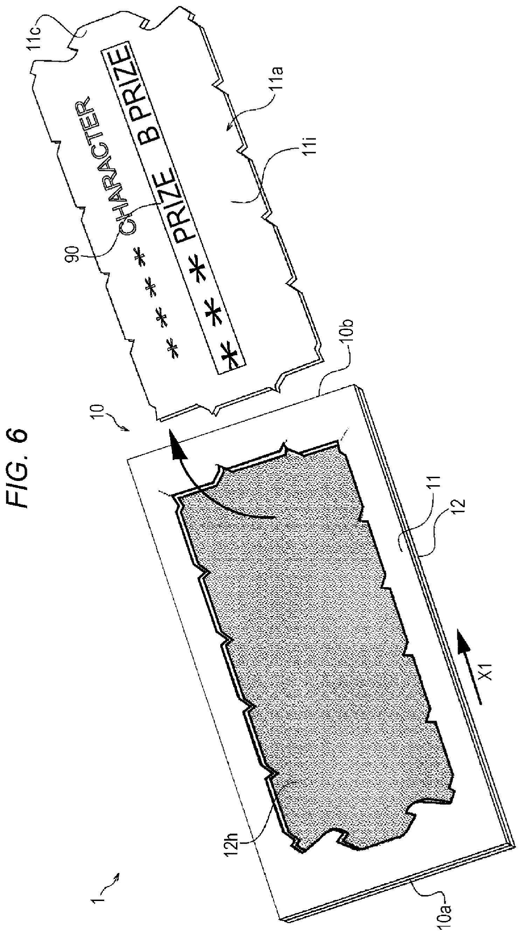

FIG. 6 is a perspective view illustrating an example of an opening form of the lottery ticket 1.

In the final stage of the opening operation, as illustrated in FIG. 6, an opened mark portion 12h is formed in a state where the opening portion 11a is completely separated from an outer peripheral portion 11b outside the separation portion 20 along the separation portion 20. The opening portion 11a thus has a rectangular shape with a slightly jagged outer peripheral edge, and is completely separated from the second sheet body 12. After the opening portion 11a is opened, an information portion 90, such as a winning number of the lottery ticket 1, can be visually recognized as illustrated in the drawing. As a result, the lottery ticket 1 can be exchanged for a prize, such as a B prize.

An area of the opening portion 11a is larger than the area of the outer peripheral portion 11b to increase an information description area.

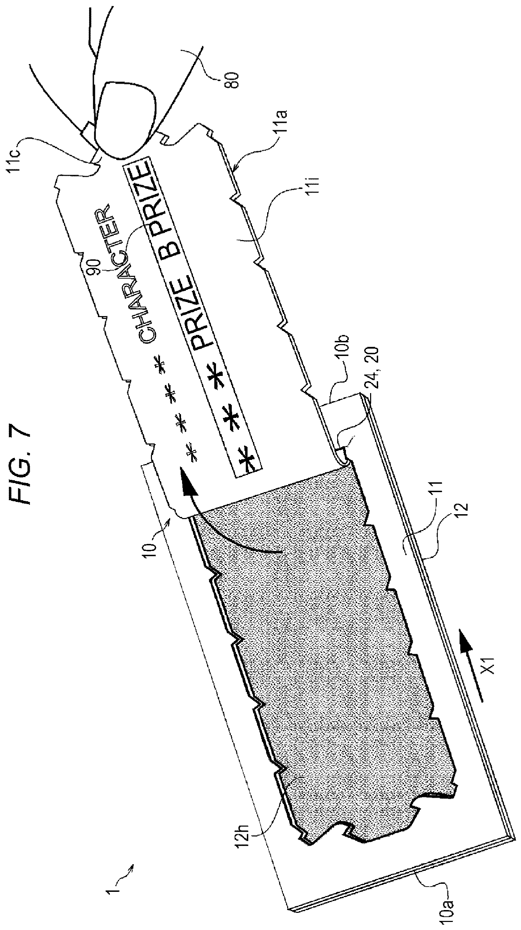

FIG. 7 is a perspective view illustrating another example of the opening form of the lottery ticket 1.

An opened state of the opening portion 11a illustrated in FIG. 7 is a state in which a part of the opening portion 11a is held by the second sheet body 12. That is, the opening portion 11a is in a state where a portion other than a periphery of the fourth separation portion 24 at the right side end of the opening portion 11a is peeled off, and is in a state connected to the outer peripheral portion 11b. The information portion 90 can also be viewed in such a state.

In the lottery ticket 1 of the present embodiment, as described above, the separation portion 20 includes the curve in the vicinity of the tab portion 11c, so that the opening direction can be smoothly changed without causing unexpected breakage. In particular, the opening direction can be made to proceed in the second direction (X2) opposite to the opening operation direction in the first direction (X1) by the first separation portion 21 including the curved portion 210 near the tab portion 11c, so that the area of the opening portion 11a can be increased. In addition, the movements of the hands in the opening operation are always movements only in the first direction (X1), so that the opening operation is simple and easy.

In the lottery ticket 1 of the present embodiment, the separation portion 20 and the holding portion 11d are alternately arranged, so that the peeling operation is easy. In addition, each second separation portion 22 of the separation portion 20 is provided with the long straight portion along the long sides 10c and 10d (the fourth straight portion 224), so that the opening operation is easy.

In the lottery ticket 1 of the present embodiment, the separation portion 20 is provided with many second separation portions 22, third separation portions 23, and fourth separation portions 24 that do not include a curve, so that the opening operation can be easily performed.

In the lottery ticket 1 of the present embodiment, in the initial opening of the opening portion 11a in the width direction, the second opening length L2 in the second direction (the moving distance to the left side caused by the opening) is smaller than the first opening length L1 in the first direction (X1) (the moving distance to the right side caused by the opening), so that return of the opening direction does not become too large. A large opening area (the opening portion 11a) can thus be provided while avoiding deterioration of the opening operability.

Although the embodiment of the present invention has been described above, the present invention can be appropriately modified within the scope of the technical idea. For example, the lottery ticket 1 has a substantially rectangular shape in the above embodiment; however, the shape of the lottery ticket 1 is not necessarily limited thereto.

In addition, the peeling operation moves from the left side to the right side of the lottery ticket 1 in the above embodiment; however, the peeling operation may be performed in the opposite direction.

As described above, the following matters are described in the present specification.
(1) A lottery ticket, in which
   the lottery ticket includes a main body portion including an opening portion,
   the main body portion is formed with a holding portion capable of holding the opening portion and a separation portion capable of separating the opening portion,
   the opening portion includes a tab portion, and
   the separation portion includes a curve in a vicinity of the tab portion.
(2) The lottery ticket as recited in (1), in which
   a plurality of the holding portions and a plurality of the separation portions are alternately formed in the main body portion.
(3) The lottery ticket as recited in (1) or (2), in which
   the main body portion is configured such that a length of the holding portion is shorter than a length of the separation portion.
(4) The lottery ticket as recited in any one of (1) to (3), in which
   the separation portion includes a first separation portion including a curve and a second separation portion without a curve.
(5) The lottery ticket as recited in (4), in which
   the first separation portion is formed in the vicinity of the tab portion.
(6) The lottery ticket as recited in (4) or (5), in which
   the separation portion includes two first separation portions.
(7) The lottery ticket as recited in any of (4) to (6), in which
   the opening portion includes more second separation portions than the first separation portion.
(8) The lottery ticket as recited in any of (4) to (7), in which
   the opening portion is openable in the second separation portion after being opened in the first separation portion.
(9) The lottery ticket as recited in (4), in which
   the opening portion is openable in a first direction and a second direction different from the first direction.
(10) The lottery ticket as recited in (9), in which
   the opening portion is openable in the order of the first direction, the second direction, and the first direction.
(11) The lottery ticket as recited in (9) or (10), in which
   the main body portion includes one end portion and an other end portion and
   the first direction is a direction from the one end portion toward the other end portion.
(12) The lottery ticket as recited in (11), in which
   the main body portion includes the one end portion and the other end portion as short sides and
   the tab portion is formed in a vicinity of either of the one end portion or the other end portion.
(13) The lottery ticket as recited in (11) or (12), in which
   the first separation portion is formed in the vicinity of either of the one end portion or the other end portion.
(14) The lottery ticket as recited in any of (9) to (13), in which
   the opening portion is configured such that a second opening length in the second direction after opening by a first opening length in the first direction is smaller than the first opening length.
(15) The lottery ticket as recited in any of (4) to (14), in which
   the first separation portion includes a curved portion and a straight portion and
   the first separation portion is configured such that the opening of the first separation portion proceeds from the curved portion to the straight portion.
(16) The lottery ticket as recited in (15), in which
   the straight portion of the first separation portion includes two straight parts of a first straight portion and a second straight portion and
   the first straight portion and the second straight portion are formed at an obtuse angle.
(17) The lottery ticket as recited in (16), in which
   the first straight portion is formed to be longer than the second straight portion.
(18) The lottery ticket as recited in any of (4) to (17), in which
   the second separation portion includes two straight portions of a third straight portion and a fourth straight portion and
   the third straight portion and the fourth straight portion are formed at an obtuse angle.
(19) The lottery ticket as recited in (18), in which
   the third straight portion is formed to be shorter than the fourth straight portion.
(20) The lottery ticket as recited in any of (4) to (19), in which
   the separation portion further includes a third separation portion and
   the opening portion is to be formed with the tab portion by separation of the third separation portion.
(21) The lottery ticket as recited in (20), in which
   the separation portion further includes a fourth separation portion and
   the fourth separation portion has a shape same as or similar to a shape of the third separation portion.
(22) The lottery ticket as recited in any of (1) to (21), in which
   the main body portion further includes an information portion and
   the information portion is configured to be visually recognizable after the opening portion is opened.
(23) The lottery ticket as recited in any of (1) to (22), in which
   the main body portion has a rectangular shape and
   an outer peripheral portion of the opening portion has a rectangular shape.
(24) The lottery ticket as recited in any of (1) to (23), in which
   the main body portion includes a one surface portion constituting a surface of the main body portion and an other surface portion, and the opening portion is formed only on the one surface portion.
(25) The lottery ticket as recited in (24), in which
   the opening portion is configured such that at least a part of the opening portion is held by the other surface portion or the entire opening portion is not held by the other surface portion in an opened state of the opening portion.
(26) The lottery ticket as recited in (24) or (25), in which
   the main body portion is configured such that a size of a portion excluding the opening portion is smaller than a size of the opening portion on the one surface portion.

### Reference Signs List

- 1: Lottery ticket
- 10: Main body portion
- 11: First sheet body (one surface portion)
- 11a: Opening portion
- 11c: Tab portion
- 11d: Holding portion
- 12: Second sheet body (other surface portion)
- 20: Separation portion
- 21: First separation portion (separation portion)
- 22: Second separation portion (separation portion)
- 23: Third separation portion (separation portion)
- 24: Fourth separation portion (separation portion)
- 90: Information portion
- 210: Curved portion
- 211: First straight portion
- 212: Second straight portion
- 223: Third straight portion
- 224: Fourth straight portion

## Claims

1. A lottery ticket (1), **characterized in that**
the lottery ticket (1) includes a main body portion (10) including an opening portion (11a),
the main body portion (10) is formed with a holding portion (11d) capable of holding the opening portion (11a) and a separation portion (20) capable of separating the opening portion (11a),
the opening portion (11a) includes a tab portion (11c), and
the separation portion (20) includes a curve in a vicinity of the tab portion (11c).

2. The lottery ticket (1) according to claim 1, **characterized in that**
a plurality of the holding portions (11d) and a plurality of the separation portions (20) are alternately formed in the main body portion (10).

3. The lottery ticket (1) according to claim 1, **characterized in that**
the main body portion (10) is configured such that a length of the holding portion (11d) is shorter than a length of the separation portion (20).

4. The lottery ticket (1) according to claim 1, **characterized in that**
the separation portion (20) includes a first separation portion (21) including a curve and a second separation portion (22) without a curve.

5. The lottery ticket (1) according to claim 4, **characterized in that**
the first separation portion (21) is formed in the vicinity of the tab portion (11c).

6. The lottery ticket (1) according to claim 4, **characterized in that**
the separation portion (20) includes two first separation portions (21).

7. The lottery ticket (1) according to claim 4, **characterized in that**
the opening portion (11a) includes more second separation portions (22) than the first separation portion (21).

8. The lottery ticket (1) according to claim 4, **characterized in that**
the opening portion (11a) is openable in the second separation portion (22) after being opened in the first separation portion (21).

9. The lottery ticket (1) according to claim 4, **characterized in that**
the opening portion (11a) is openable in a first direction (X1) and a second direction (X2) different from the first direction (X1).

10. The lottery ticket (1) according to claim 9, **characterized in that**
the opening portion (11a) is openable in the order of the first direction (X1), the second direction (X2), and the first direction (X1).

11. The lottery ticket (1) according to claim 9, **characterized in that**
the main body portion (10) includes one end portion (10a) and an other end portion (10b) and
the first direction (X1) is a direction from the one end portion (10a) toward the other end portion (10b).

12. The lottery ticket (1) according to claim 11, **characterized in that**
the main body portion (10) includes the one end portion (10a) and the other end portion (10b) as short sides and
the tab portion (11c) is formed in a vicinity of either of the one end portion (10a) or the other end portion (10b).

13. The lottery ticket (1) according to claim 11, **characterized in that**
the first separation portion (21) is formed in the vicinity of either of the one end portion (10a) or the other end portion (10b).

14. The lottery ticket (1) according to claim 9, **characterized in that**
the opening portion (11a) is configured such that a second opening length (L2) in the second direction (X2) after opening by a first opening length (L1) in the first direction (X1) is smaller than the first opening length (L1).

15. The lottery ticket (1) according to claim 4, **characterized in that**
the first separation portion (21) includes a curved portion (210) and a straight portion (211) and
the first separation portion (21) is configured such that the opening of the first separation portion (21) proceeds from the curved portion (210) to the straight portion (211).

16. The lottery ticket (1) according to claim 15, **characterized in that**
the straight portion of the first separation portion (21) includes two straight parts of a first straight portion (211) and a second straight portion (212) and
the first straight portion (211) and the second straight portion (212) are formed at an obtuse angle.

17. The lottery ticket (1) according to claim 16, **characterized in that**
the first straight portion (211) is formed to be longer than the second straight portion (212).

18. The lottery ticket (1) according to claim 4, **characterized in that**
the second separation portion (22) includes two straight portions of a third straight portion (223) and a fourth straight portion (224) and
the third straight portion (223) and the fourth straight portion (224) are formed at an obtuse angle.

19. The lottery ticket (1) according to claim 18, **characterized in that**
the third straight portion (223) is formed to be shorter than the fourth straight portion (224).

20. The lottery ticket (1) according to claim 4, **characterized in that**
the separation portion (20) further includes a third separation portion (223) and
the opening portion (11a) is to be formed with the tab portion (11c) by separation of the third separation portion (223).

21. The lottery ticket (1) according to claim 20, **characterized in that**
the separation portion (20) further includes a fourth separation portion (24) and
the fourth separation portion (24) has a shape same as or similar to a shape of the third separation portion (223).

22. The lottery ticket (1) according to claim 1, **characterized in that**
the main body portion (10) further includes an information portion (90) and
the information portion (90) is configured to be visually recognizable after the opening portion (11a) is opened.

23. The lottery ticket (1) according to claim 1, **characterized in that**
the main body portion (10) has a rectangular shape and
an outer peripheral portion (11b) of the opening portion (11a) has a rectangular shape.

24. The lottery ticket (1) according to claim 1, **characterized in that**
the main body portion (10) includes a one surface portion (11) constituting a surface of the main body portion (10) and an other surface portion (12), and
the opening portion (11a) is formed only on the one surface portion (11).

25. The lottery ticket (1) according to claim 24, **characterized in that**
the opening portion (11a) is configured such that at least a part of the opening portion (11a) is held by the other surface portion (12) or the entire opening portion (11a) is not held by the other surface portion (12) in an opened state of the opening portion (11a).

26. The lottery ticket (1) according to claim 24 or 25, **characterized in that**
the main body portion (10) is configured such that a size of a portion excluding the opening portion (11a) is smaller than a size of the opening portion (11a) on the one surface portion (11).
